# EUROPÄISCHE PATENTSCHRIFT

(11) **EP 2 856 437 B1**
(45) Veröffentlichungstag und Bekanntmachung des Hinweises auf die Patenterteilung: **24.03.2021**
(21) Anmeldenummer: 13731258.3
(22) Anmeldetag: 29.05.2013
(51) Int. Cl.: G07C 9/00, G06F 21/33

(54) **VERFAHREN UND VORRICHTUNG ZUR STEUERUNG EINES SCHLIEßMECHANISMUS MIT EINEM MOBILEN ENDGERÄT**
METHOD AND DEVICE FOR CONTROL OF A LOCK MECHANISM USING A MOBILE TERMINAL
PROCÉDÉ ET DISPOSITIF POUR COMMANDER UN MÉCANISME DE VERROUILLAGE AU MOYEN D'UN TERMINAL MOBILE

(30) Priorität: 05.06.2012 AT 502222012
(43) Veröffentlichungstag der Anmeldung: 08.04.2015
(73) Patentinhaber: Tapkey GmbH, 1080 Wien (AT)
(72) Erfinder: MINICHMAYR, Markus, A-4072 Alkoven (AT)
(74) Vertreter: Sonn & Partner Patentanwälte
(86) Internationale Anmeldenummer: PCT/AT2013/050113
(87) Internationale Veröffentlichungsnummer: WO 2013/181682

(56) Entgegenhaltungen:
- EP-A1- 1 336 937
- EP-A1- 2 085 934
- WO-A1-02/093502
- WO-A1-03/073242
- WO-A1-2007/126375
- WO-A2-2005/066908
- US-A1- 2006 170 533
- US-A1- 2010 176 919
- US-A1- 2010 257 357
- US-B1- 6 263 432
- US-B1- 6 678 731
- WOO T Y C ET AL: "Designing a distributed authorization service", INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, Bd. 2, 29. März 1998 (1998-03-29), Seiten 419-429, XP010270393, DOI: 10.1109/INFCOM.1998.665058 ISBN: 978-0-7803-4383-2
- Hasan Akram ET AL: "MASTER THESIS Secured Identity Management in Ambient Environments: Vulnerabilities and Proposed Remedies", , 11 November 2008 (2008-11-11), XP055311077, Retrieved from the Internet: URL:http://citeseerx.ist.psu.edu/viewdoc/d ownload;jsessionid=49A59B14A46AF02FFDE98DA F8071B65C?doi=10.1.1.157.1953&rep=rep1&typ e=pdf [retrieved on 2016-10-17]
- Hasan Ibne Akram ET AL: "User-centric Identity Management in Ambient Environments", International Journal On Advances in Intelligent Systems, 1 January 2009 (2009-01-01), XP055311513, Retrieved from the Internet: URL:https://www.thinkmind.org/download.php ?articleid=intsys_v2_n1_2009_18 [retrieved on 2016-10-18]
- Steve Riley: "It's Me, and Here's My Proof: Why Identity and Authentication Must Remain Distinct | Microsoft Docs", , 20 May 2008 (2008-05-20), XP055689541, Retrieved from the Internet: URL:https://docs.microsoft.com/en-us/previ ous-versions/tn-archive/cc512578(v=technet .10) [retrieved on 2020-04-27]

## Beschreibung

Die Offenbarung betrifft ein Verfahren zur Steuerung eines Schließmechanismus durch einen Benutzer mit einem mobilen Endgerät, wobei zum Steuern des Schließmechanismus vom mobilen Endgerät eine lokale Datenverbindung zum Schließmechanismus aufgebaut wird, und zum Ausstellen eines Schlüssels eine Authentifizierungsinformation vom mobilen Endgerät an eine Autorisierungsinstanz in einem Netzwerk gesendet wird, und nach Überprüfung der Authentizität der Authentifizierungsinformation bei der Autorisierungsinstanz der Schlüssel zum Öffnen des Schließmechanismus ausgestellt wird, mit welchem Schlüssel der Schließmechanismus geöffnet wird.

Die Offenbarung betrifft weiters eine Vorrichtung zur Steuerung eines Schließmechanismus durch einen Benutzer mit einem mobilen Endgerät, welches eine Benutzerschnittstelle, Mittel zur Herstellung einer lokalen Datenverbindung und Mittel zur Herstellung einer Verbindung zu einem Netzwerk, insbesondere dem Internet, aufweist, wobei der Schließmechanismus mit der lokalen Datenverbindung verbindbar ist, wobei eine mit einem Netzwerk verbindbare Autorisierungsinstanz vorgesehen ist und die Autorisierungsinstanz zur Ausstellung eines Schlüssels nach Aussendung einer Authentifizierungsinformation vom mobilen Endgerät an die Autorisierungsinstanz im Netzwerk und nach Überprüfung der Authentizität der Authentifizierungsinformation ausgebildet ist, mit welchem Schlüssel der Schließmechanismus öffenbar ist.

Die vorliegende Offenbarung betrifft ein Verfahren und eine Vorrichtung, mit dessen Hilfe der Zutritt von physikalischen Individuen (Personen, Tieren, Robotern) zu einer Sache oder deren Nutzung einer Sache (z.B. Automaten) gesteuert werden kann.

Das Verfahren nutzt als vermittelnde Instanz ein mobiles Endgerät (z.B. Smartphone, Rechner, Tablet-PC, Fahrzeug, etc.) das geeignet ist, eine lokal und gegebenenfalls zeitlich beschränkte Datenverbindung (in weiterer Folge "lokale Datenverbindung", z.B. NFC, RFID, Bluetooth, WLAN) zu dem zu öffnenden Schließmechanismus der geschützten Ressource herzustellen sowie eine Datenverbindung (in weiterer Folge "Netzwerkverbindung", gegebenenfalls zeitlich beschränkt) zu mindestens einem Identitätsanbieter sowie zu einer Autorisierungsinstanz im Netzwerk herzustellen. Das mobile Endgerät weist eine Benutzerschnittstelle, typischerweise ein grafisches Display, eine Tastatur und/oder einen Touchscreen, etc., für Benutzerinteraktionen auf.

Bereits bekannt ist die Nutzung eines mobilen Endgeräts zum Steuern von Schließmechanismen. Durch diese entfällt die bei den meisten anderen Verfahren notwendige Ausgabe von physikalischen Schlüsseln (herkömmlicher Schlüssel, RFID Karte, etc.). Dennoch sind herkömmliche Verfahren relativ aufwändig hinsichtlich der Überprüfung der Identität und Autorisierung des Benutzers.

Die WO 2007/126375 A1 betrifft ein Verfahren und eine Vorrichtung der gegenständlichen Art, wobei zur Ausstellung eines Schlüssels zum Öffnen des Schließmechanismus eine Authentifizierung des mobilen Endgeräts anhand einer eindeutigen Identifikation des mobilen Endgeräts vorgenommen wird. Darüber hinaus ist bei Änderung des mobilen Endgeräts eine aufwendige Pflege der Zuordnung zwischen mobilen Endgerät und Autorisierungsinstanz notwendig.

Die EP 1 336 937 A1 betrifft ein ähnliches Verfahren zur Steuerung eines Schließmechanismus, wobei ebenfalls eine Anmeldung und Authentifizierung des mobilen Endgeräts, unabhängig vom jeweiligen Benutzers des mobilen Endgeräts, stattfindet.

Die WO 02/093502 A1 beschreibt ein Verfahren zur Kontrolle des Zugriffs von Steuerterminals auf verschiedene Anwendungsgeräte, z.B. auch automatische Garagentore bzw. -öffner. Ein Steuerterminal und ein Administratorterminal besitzen dabei jeweils ein Schlüsselpaar. Am Administratorterminal kann die Authentizität eines von einem Steuerterminal verwendeten öffentlichen Schlüssels anhand einer Signatur einer Zertifizierungsstelle überprüft werden. Sobald die Authentizität des Schlüssels festgestellt wurde, kann damit die Signatur einer empfangenen Zugriffsanfrage zur Erteilung von Zugriffsrechten überprüft werden.

Die US 2010/0176919 A1 zeigt ein System und Verfahren zur Bereitstellung einer einmaligen Zugangserlaubnis für eine elektronische Schließvorrichtung.

Die US 2006/0170533 A1 zeigt ein Verfahren, bei dem ein Mobilgerät eine Identifikation von einem Schloss abruft, sich gegenüber einem Server authentifiziert und mit der Schloss-Identifikation einen digitalen Schlüssel abfragt. Mit dem digitalen Schlüssel entsperrt das Mobilgerät schließlich das Schloss.

Die Master Arbeit "Secured Identity Management in Ambient Environments: Vulnerabilities and Proposed Remedies" von Hasan Akram aus 2008 (Fraunhofer-Institut SIT und Technische Universität Darmstadt) sowie der Artikel "User-centric identity management in ambient environments" vom selben Autor zusammen mit Mario Hoffmann aus 2009 (International Journal On Advances in Intelligent Systems Volume 2, Number 1, 2009) beschreiben ein "Identity Metasystem" mit einem Identitätsprovider (IdP) und delegierter Authentifikation zwischen verschiedenen Domänen.

Mit den Begriffen "Identität" und "Authentifizierung" setzt sich der Artikel "It's Me, and Here's My Proof: Why Identity and Authentication Must Remain Distinct" von Steve Riley (Microsoft Docs, 20. Mai 2008) auseinander.

Die US 2010/0257357 A1 zeigt ein Autorisierungs- und Authentifizierungssystem, das ein mobiles Kommunikationsgerät verwendet.

Die Aufgabe der vorliegenden Erfindung besteht in der Schaffung eines oben genannten Verfahrens und einer oben genannten Vorrichtung zur Steuerung eines Schließmechanismus mit einem mobilen Endgerät, durch welche eine besonders einfache und flexible Steuerung erzielbar ist. Insbesondere soll eine Vergabe von Zutrittsberechtigungen an authentifizierte Benutzer ermöglicht werden, ohne dass ein physisches Treffen mit einer ausgebenden Instanz (Person oder Gerät) notwendig ist, wobei außerdem der mit einer Registrierung und Ausgabe zusätzlicher Zugangsdaten, sowie Übermittlungssicherheit und Speicherung der Zugangsdaten verbundene Aufwands bzw. die verbundenen Probleme und Risiken vermieden werden sollen.

Gelöst wird die erfindungsgemäße Aufgabe durch das in Anspruch 1 definierte Verfahren. Das Verfahren beinhaltet, dass die Authentifizierungsinformation eine für einen von der Autorisierungsinstanz verschiedenen Identitätsanbieter eindeutige, geräteübergreifende virtuelle Identität authentifiziert, wobei zum Erhalt der Authentifizierungsinformation mit dem mobilen Endgerät eine Verbindung über ein Netzwerk zu dem Identitätsanbieter hergestellt wird, sich der Benutzer mit Hilfe des mobilen Endgeräts an dem Identitätsanbieter für die virtuelle Identität authentifiziert und daraufhin vom Identitätsanbieter die Authentifizierungsinformation an das mobile Endgerät gesendet wird, wobei die Autorisierungsinstanz eine zur Ausstellung des Schlüssels erforderliche Zutritts- bzw. Zugriffsberechtigung an die virtuelle Identität bindet. Im Gegensatz zu bekannten Verfahren erlaubt das beschriebene Verfahren die Delegation der Authentifizierung an eine oder mehrere vertrauenswürdige Instanzen (Identitätsanbieter). Diese Delegation erlaubt die Gewährung von Zutritts- oder Nutzungsberechtigungen an etablierte virtuelle Identitäten. Das mobile Endgerät nutzt zumindest eine Netzwerkverbindung sowie die Benutzerschnittstelle um mittels bekannter Technologien zur Delegation der Benutzerauthentifikation (z.B. OAuth) einen Anmeldevorgang bei einem Identitätsanbieter durchzuführen und mittels der so gewonnenen Authentifizierungsinformation einen Schlüssel (virtuellen Zutrittsschlüssel) zum Öffnen des Schließmechanismus von der Autorisierungsinstanz abzufragen. Die lokale Datenverbindung wird in weiterer Folge genutzt um den Schlüssel zum Schließmechanismus zu übertragen und den Schließmechanismus auszulösen. Das Verfahren ist sowohl für Schließmechanismen mit einer permanenten Datenverbindung zur Autorisierungsinstanz geeignet als auch für solche ohne einer solchen. Im Vergleich zu herkömmlichen Verfahren bringt das beschriebene Verfahren eine wesentliche Vereinfachung in der Nutzung und Verwaltung von Zutrittssystemen. Es erlaubt die Bindung einer Zutritts- bzw. Zugriffsberechtigung an eine etablierte virtuelle Identität anstatt an ein physikalisches Medium (physikalischer Schlüssel oder Zutrittskarte) oder individuell neu vergebene Zugriffsschlüssel. Ein wesentlicher Vorteil des gegenständlichen Verfahrens besteht darin, dass die Steuerung des Schließmechanismus nicht an ein bestimmtes mobiles Endgerät gebunden ist, sondern ein berechtigter Benutzer diese Steuerung mit verschiedenen mobilen Endgeräten ausgeführt werden kann, die eine Überprüfung der Berechtigung vornehmen können. Im Folgenden wird anstelle des Begriffs Schlüssel auch der Begriff Zutrittszertifikat verwendet, welches zusätzliche Daten, wie Berechtigungen etc. enthalten kann.

Vorteilhafter Weise wird zum Erhalt des Schlüssels zum Öffnen des Schließmechanismus mit dem mobilen Engerät eine Verbindung zu einem vorhandenen Identitätsanbieter hergestellt. Durch die Verwendung etablierter Identitätsanbieter entfällt die Registrierung und Ausgabe zusätzlicher Zugangsdaten samt der damit verbundenen Probleme der Übermittlungssicherheit, Speicherung, etc. Dies sorgt auf Seiten der Benutzer dafür, dass insgesamt weniger Benutzerdaten verwaltet werden müssen, was wiederum zur Sicherheit beitragen kann. Andererseits entfällt auf Betreiberseite die Implementierung und der Betrieb eines Authentifizierungssystems samt der dafür notwendigen (Sicherheits-) Überlegungen. Stattdessen wird diese Funktionalität an eine (oder mehrere) vertrauenswürdige Identitätsanbieter delegiert. Das Verfahren erlaubt auch die Vergabe von Zutrittsberechtigungen an Individuen, ohne dass ein physisches Treffen mit einer ausgebenden Instanz (Person oder Gerät) notwendig ist. Die Delegierung der Authentifizierung ist in virtuellen Systemen bereits etabliert, die in diesem Verfahren beschriebene Übertragung auf physikalische Zutrittssysteme bringt die entsprechenden Vorteile in die "reale" Welt.

Beispielsweise wird der Schließmechanismus mit einem Smartphone, einem Rechner oder dgl. als mobiles Endgerät gesteuert.

Zum Steuern des Schließmechanismus wird vom mobilen Endgerät eine Nahfeld-Kommunikations (NFC)-Verbindung, eine Hochfrequenzverbindung, eine Bluetooth-Verbindung und bzw. oder eine WLAN-Verbindung als lokale Datenverbindung zum Schließmechanismus aufgebaut. Smartphones weisen meist eine oder mehrere derartige Verbindungsmöglichkeiten auf.

Wenn der Schließmechanismus keine Verbindung zur Autorisierungsinstanz aufweist, wird der Schlüssel zum Öffnen des Schließmechanismus von der Autorisierungsinstanz an das mobile Endgerät übermittelt und vom mobilen Endgerät über die lokale Datenverbindung an den Schließmechanismus. Dabei handelt es sich um das sogenannte Offline-Verfahren.

Wenn eine Verbindung zwischen dem Schließmechanismus und der Autorisierungsinstanz über das Netzwerk aufgebaut wird, kann der Schlüssel zum Öffnen des Schließmechanismus auch direkt von der Autorisierungsinstanz an den Schließmechanismus übermittelt werden. Hier spricht man vom sogenannten Online-Verfahren.

Vor der Öffnung des Schließmechanismus können zusätzliche vorgegebene Bedingungen, insbesondere zeitliche Vorgaben, abgefragt werden. Dadurch kann das Steuern des Schließmechanismus an diese zusätzliche Bedingungen, beispielsweise bestimmte Zeiten, zu welchen ein Zutritt möglich ist, oder ein Ablaufdatum des Schlüssels, geknüpft werden.

Der Aufbau der lokalen Datenverbindung zwischen dem mobilen Endgerät und dem Schließmechanismus kann durch eine physikalische Interaktion mit dem mobilen Endgerät, beispielsweise die Betätigung eines Bedienungselements am mobilen Endgerät oder die Ausführung einer Bewegung mit dem mobilen Endgeräts, insbesondere in die Nähe des Schließmechanismus, ausgelöst werden. Bei einer lokalen Datenverbindung in Form einer NFC-Kommunikation erfolgt die Herstellung der Verbindung dadurch, dass das mobile Endgerät in die unmittelbare Nähe (10 cm) des Schließmechanismus gebracht wird.

Vom Schließmechanismus wird vorzugsweise ein Datenpaket mit einer eindeutigen Identifikation an das mobile Endgerät gesendet, insbesondere unmittelbar nach dem Aufbau der lokalen Datenverbindung. Mit der eindeutigen Identifikation kann der Schließmechanismus eindeutig zugeordnet werden.

Insbesondere kann die eindeutige Identifikation des Schließmechanismus in verschlüsselter Form an das mobile Endgerät gesendet werden.

Gelöst wird die erfindungsgemäße Aufgabe durch die in Anspruch 10 definierte Steuerungsvorrichtung, bei der ein mit dem Netzwerk verbindbarer, von der Autorisierungsinstanz verschiedener Identitätsanbieter vorgesehen ist und die Authentifizierungsinformation eine für den Identitätsanbieter eindeutige, geräteübergreifende virtuelle Identität authentifiziert, wobei der Identitätsanbieter zur Aussendung einer Authentifizierungsinformation vom Identitätsanbieter an das mobile Endgerät eingerichtet ist, und das mobile Endgerät zur Anmeldung beim Identitätsanbieter ausgebildet ist, wobei eine Zutritts- bzw. Zugriffsberechtigung zur Ausstellung des Schlüssels durch die Autorisierungsinstanz an die virtuelle Identität gebunden ist. Zu den dadurch erzielbaren Vorteilen wird auf die obige Beschreibung zum Steuerungsverfahren verwiesen. Das Netzwerk, in welchem der zumindest eine Identitätsanbieter angeordnet ist, kann vom Netzwerk, in dem die Autorisierungsinstanz angeordnet ist verschieden sein.

Vorteilhafterweise ist das mobile Endgerät durch ein Smartphone, einen Rechner oder dgl. gebildet.

Die Mittel zur Herstellung der lokalen Datenverbindung können durch einen Nahfeld-Kommunikations (NFC)-Sender, einen RFID-Transponder, einen Bluetooth-Sender und bzw. oder durch einen WLAN-Router gebildet sein.

Vorteilhafterweise ist das mobile Endgerät zum Empfang des Schlüssels von der Autorisierungsinstanz ausgebildet.

Ebenso kann der Schließmechanismus Mittel zur Verbindung mit der Autorisierungsinstanz über das Netzwerk aufweisen, sodass der Schlüssel zum Öffnen des Schließmechanismus von der Autorisierungsinstanz an den Schließmechanismus übermittelbar ist. Diese Variante ist durch einen höheren Aufwand gekennzeichnet, ermöglicht jedoch eine rasche Anpassung an geänderte Situationen, da von der Autorisierungsinstanz geänderte Informationen an den Schließmechanismus übermittelt werden können.

Wenn die Übermittlung des Schlüssels zum Öffnen des Schließmechanismus von zusätzlichen Bedingungen, insbesondere zeitlichen Vorgaben, abhängig ist, kann eine höhere Sicherheit erzielt werden.

Die Benutzerschnittstelle des mobilen Endgeräts ist vorzugsweise durch einen Touchscreen gebildet, der die Eingabe- und Ausgabemöglichkeit im mobilen Endgerät ist. Die Interaktion des Benutzers mit dem mobilen Endgerät kann aber auch über eine Sprachsteuerung, Tastatur, etc. erfolgen.

Die Erfindung wird anhand der beigefügten Zeichnungen näher erläutert. Darin zeigen:
- Fig. 1: ein schematisches Blockdiagramm einer erfindungsgemäßen Vorrichtung zur Steuerung eines Schließmechanismus mit einem mobilen Endgerät ohne Verbindung des Schließmechanismus mit einer Autorisierungsinstanz (Offline-Verfahren);
- Fig. 2: ein schematisches Ablaufdiagramm eines erfindungsgemäßen Offline-Verfahrens zur Steuerung eines Schließmechanismus mit einem mobilen Endgerät;
- Fig. 3: ein schematisches Blockdiagramm einer weiteren Ausführungsform einer erfindungsgemäßen Vorrichtung zur Steuerung eines Schließmechanismus mit einem mobilen Endgerät mit Verbindung des Schließmechanismus mit einer Autorisierungsinstanz (Online-Verfahren);
- Fig. 4: ein schematisches Ablaufdiagramm einer weiteren Ausführungsform eines erfindungsgemäßen Online-Verfahrens zur Steuerung eines Schließmechanismus mit einem mobilen Endgerät; und
- Fig. 5: ein schematisches Ablaufdiagramm einer weiteren Ausführungsform eines erfindungsgemäßen Offline-Verfahrens zur Steuerung eines Schließmechanismus mit einem mobilen Endgerät.

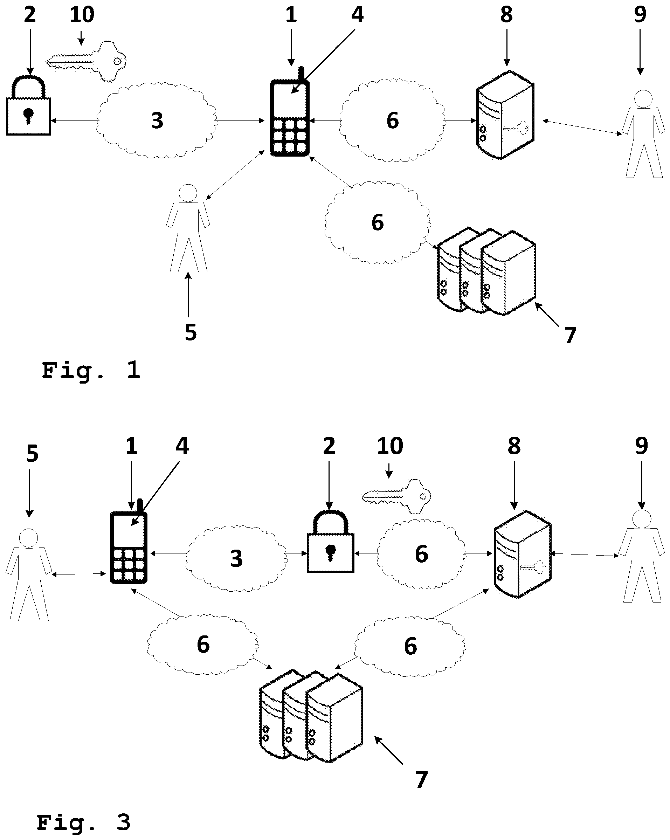

Fig. 1 zeigt ein schematisches Blockdiagramm einer erfindungsgemäßen Vorrichtung zur Steuerung eines Schließmechanismus 2 mit einem mobilen Endgerät 1 ohne Verbindung des Schließmechanismus mit einer Autorisierungsinstanz 8 (Offline-Verfahren). Das mobile Endgerät 1 ist ein elektronisches Gerät, das in der Lage ist, mit dem Benutzer 5, einer Autorisierungsinstanz 8 sowie dem Schließmechanismus 2 zu kommunizieren. Diese Kommunikationen müssen nicht gezwungenermaßen gleichzeitig erfolgen können. Als Schließmechanismus 2 gilt eine technische Vorrichtung, die Zutritt zu oder Zugriff auf eine Sache (z.B. Türen oder Automaten) gewährt. Der Schließmechanismus 2 muss in der Lage sein, mit dem mobilen Endgerät 1 zu kommunizieren und Software auszuführen, die den Anforderungen aus dem beschriebenen Verfahren genügt. Der Benutzer 5 ist jenes Individuum, das den Schließmechanismus 2 auslösen möchte. Typischer Weise ist der Benutzer 5 ein Mensch, es kann mit Einschränkungen jedoch auch ein Tier, Roboter, Fahrzeug etc. ein solcher Benutzer 5 sein. Das mobile Endgerät 1 ist in der Lage, ein Software-Programm auszuführen, welches die Anforderungen aus dem erfindungsgemäßen Verfahren erfüllt. Das mobile Endgerät 1 kann beispielsweise ein Mobiltelefon, insbesondere ein Smartphone, ein Rechner, z.B. ein Tablet-PC sein, kann aber auch durch andere Einrichtungen, beispielsweise ein Fahrzeug, mit welchem der Schließmechanismus 2 gesteuert werden soll, gebildet sein. Das mobile Endgerät 1 ist in der Lage, eine Verbindung mit einem Netzwerk 6, insbesondere dem Internet, aufzubauen und mit Einrichtungen, welche mit dem Netzwerk 6 verbunden sind, zu kommunizieren. So ist im Netzwerk 6 ein Identitätsanbieter 7 vorgesehen. Dieser Identitätsanbieter 7 ist eine Instanz, die sowohl der Benutzer 5 als auch eine Autorisierungsinstanz 8 vertrauen und die in der Lage ist den Benutzer 5 zu authentifizieren. Der Identitätsanbieter 7 kann in einem unterschiedlichen Netzwerk 6 angeordnet sein, wie die Autoritätsinstanz 8. Es können nach dem beschriebenen Verfahren ein Identitätsanbieter 7 oder mehrere vorgesehen werden. Beispiele vorhandener Identitätsanbieter 7 sind:
- Google ID
- Windows Live ID
- Google Identity Toolkit
- LDAP (Lightweight Directory Access Protocol)
- Windows Active Directory
- Open-ID
- OAuth

Mit dem Netzwerk 6 (kann sich vom Netzwerk 6, in welchem der Identitätsanbieter 7 angeordnet ist, unterscheiden) ist weiters eine Autorisierungsinstanz 8 verbunden, welche beispielsweise durch einen Servercomputer gebildet sein kann. Die Autorisierungsinstanz 8 verwaltet Zutritts- bzw. Zugriffsberechtigungen für den Schließmechanismus 2 und stellt Zertifikate aus, die den Zutritt zu bzw. Zugriff auf eine Sache ermöglichen. Die Autorisierungsinstanz 8 wird von einem Administrator verwaltet, welcher Administrator eine Person oder Instanz sein kann, welche Zutritts- bzw. Zugriffsberechtigungen vergibt und diese über ein geeignetes Werkzeug auf die Autorisierungsinstanz 8 konfiguriert. Schließlich kann im Netzwerk 6 noch ein Softwareanbieter vorgesehen sein (nicht dargestellt). Von diesem Softwareanbieter kann das mobile Endgerät 1 die für das beschriebene Verfahren notwendige Software beziehen, um diese lokal zu installieren. Der Softwareanbieter muss sowohl für den Benutzer 5 als auch die Autorisierungsinstanz 8 vertrauenswürdig sein.

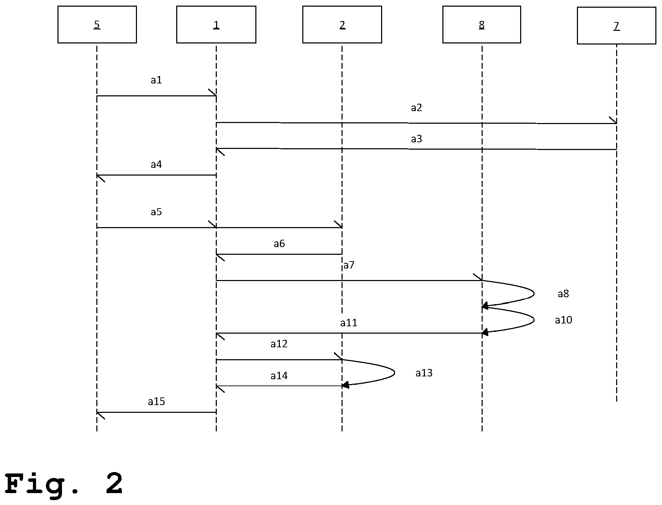

In Fig. 2 ist ein schematisches Ablaufdiagramm eines erfindungsgemäßen Offline-Verfahrens zur Steuerung eines Schließmechanismus 2 mit einem mobilen Endgerät 1 dargestellt. Bei der Implementierung des beschriebenen Steuerungsverfahrens gibt es etliche Variationen bezüglich der Reihenfolge und der konkreten Implementierung, die für den eigentlichen Kern der Kopplung eines physikalischen Schließmechanismus 2 an eine virtuelle Identität mit delegierter Authentifizierung unerheblich sind. Das Verfahren kann folgende Aspekte umfassen:
- Ein Benutzer 5 nutzt ein mobiles Endgerät 1 um sich an einem Identitätsanbieter 7, dem die Autorisierungsinstanz 8 vertraut, zu authentifizieren (Schritte a1-a4). Die Schritte a1-a4 laufen nur dann ab, wenn am mobilen Endgerät 1 noch kein gültiger Schlüssel 10 vorhanden ist oder dessen Gültigkeitsdauer abgelaufen ist. Diese Prozedur wird durch einen Erstkontakt des mobilen Endgeräts 1 mit dem Schließmechanismus 2 über die lokale Datenverbindung 3 (z.B. über eine NFC-Verbindung, Bluetooth-Verbindung, WLAN, etc.) ausgelöst. Dieser Vorgang ist nicht möglich, wenn keine Verbindung zu einem Netzwerk 6, insbesondere dem Internet, aufgebaut werden kann. Alternativ dazu kann der Authentifizierungsprozess auch durch den Benutzer 5 explizit angestoßen werden.
- Das mobile Endgerät 1 kommuniziert mit dem Schließmechanismus 2 über diese lokale Datenverbindung 3, um die Identität auszutauschen (Schritte a5, a6, a15).
- Der Benutzer 5 kann die am Identitätsanbieter 7 erfolgte Authentifizierung nutzen, um sich auch an der Autorisierungsinstanz 8 zu authentifizieren (Schritte a7-a8). Dies kann im Falle einer Onlineverbindung zwischen dem mobilen Endgerät 1 und der Autorisierungsinstanz 8 dadurch erfolgen, dass ein Authentifizierungstoken vom Identitätsanbieter 7 an das mobile Endgerät 1, von diesem weiter an die Autorisierungsinstanz 8 gesendet wird. Diese kann dem Schließmechanismus 2 die Authentizität bestätigen. Sollte eine Onlineverbindung zwischen Schließmechanismus 2 und der Autorisierungsinstanz 8 bestehen, kann der Autorisierungstoken vom mobilen Endgerät 1 auch an den Schließmechanismus 2 und von diesem weiter an die Autorisierungsinstanz 8 gesendet werden.
- Die Autorisierungsinstanz 8 ist in der Lage, die Authentizität eines Benutzers 5 anhand des weitergeleiteten Authentifizierungsmerkmals zu überprüfen und darauf basierend eine Entscheidung über die Zutritts- bzw. Zugriffsberechtigung des Benutzers 5 zu treffen (Schritte a8-a10).
- Falls ein Zutritt bzw. Zugriff gewährt werden soll, teilt die Autorisierungsinstanz 8 dem Schließmechanismus 2 dies auf einem geeigneten Weg mit. Im Falle einer Onlineverbindung zwischen diesen kann die Mitteilung auf direktem Weg erfolgen, alternativ kann dafür auch das mobile Endgerät 1 als vermittelnde Instanz genutzt werden (Schritt a11). Die Schritte a7 bis a11 laufen nur dann ab, wenn am mobilen Endgerät 1 noch kein gültiger Schlüssel 10 oder gültiges Zutrittszertifikat vorhanden ist. Sollte zu diesem Zeitpunkt mit dem mobilen Endgerät 1 keine Verbindung zur Autorisierungsinstanz 8 aufgebaut werden können (z.B. keine Internet-Verbindung möglich), so könnte dies auch zu einem früheren Zeitpunkt explizit durch den Benutzer 5 ausgelöst werden.
- Gemäß Schritt a12 wird der Schließmechanismus 2 durch das mobile Endgerät 1 ausgelöst. Die Zutrittserlaubnis kann an weitere Bedingungen, wie z.B. ein Ablaufdatum, Zeitfenster, etc. gebunden sein. Sie kann vom mobilen Endgerät 1 oder vom Schließmechanismus 2 zwischengespeichert werden, um bei zukünftigen Zugriffen die Anzahl der notwendigen Interaktionen zwischen den einzelnen Komponenten zu reduzieren. Der Schließmechanismus 2 überprüft den Schlüssel 10 bzw. das Zutrittszertifikat und die erhaltenen Informationen und erlaubt oder verweigert anhand dieser den Zutritt bzw. Zugriff (Schritt a13). Gemäß Schritt a14 wird der Erfolg des Öffnungsvorgangs an das mobile Endgerät 1 gemeldet und von diesem über die Benutzerschnittstelle 4 an den Benutzer 5 weitergegeben.

Ein Anwendungsbeispiel für das gegenständliche Steuerungsverfahren ist die Steuerung eines Schließmechanismus einer abgelegenen Berghütte, welche von einem Vermieter an einen Kunden bzw. Benutzer 5 vermietet wird. Der Vermieter und der Kunde sind räumlich getrennt, ein persönliches Treffen ist schwierig bzw. wäre aufwändig. Der Kunde besitzt ein mobiles Endgerät 1 in Form eines Smartphones mit NFC-Funktionalität und verfügt über eine E-Mail-Adresse, die zugleich seine Identität darstellt. Beispielsweise kann der Benutzer 5 des mobilen Endgeräts 1 eine E-Mail-Adresse bei Google (Gmail) besitzen, die zugleich seine Google-ID darstellt. Der Vermieter gewährt dem Kunden bzw. dessen Google-ID über das beschriebene Authentifizierungsverfahren Zutritt zur Hütte, beschränkt auf die vereinbarte Mietdauer. Vorteilhafterweise ist ein persönliches Treffen des Vermieters mit dem Kunden nicht notwendig. Nach Ablauf der Mietdauer erlischt die Zutrittsberechtigung zuverlässig. Eine Datenverbindung ist nur zum Austausch des Schlüssels notwendig, nicht jedoch bei der Hütte vor Ort.

Fig. 3 zeigt ein schematisches Blockdiagramm einer weiteren Ausführungsform einer erfindungsgemäßen Vorrichtung zur Steuerung eines Schließmechanismus 2 mit einem mobilen Endgerät 1, wobei eine Verbindung zwischen dem Schließmechanismus 2 und der Autorisierungsinstanz 8 besteht und genutzt wird (Online-Verfahren). Eine direkte Verbindung zwischen dem mobilen Endgerät 1 und der Autorisierungsinstanz 8 besteht nicht. Diese Datenverbindung wird genutzt, um Authentifizierungsinformation vom mobilen Endgerät 1 an die Autorisierungsinstanz 8 weiterzuleiten, sowie Autorisierungsanfragen zu stellen und zu beantworten. Des Weiteren wird in dieser Variation eine direkte Datenverbindung zwischen Autorisierungsinstanz 8 und Identitätsanbieter 7 genutzt um die Authentifizierungsinformationen zu überprüfen und Benutzerdaten auszutauschen.

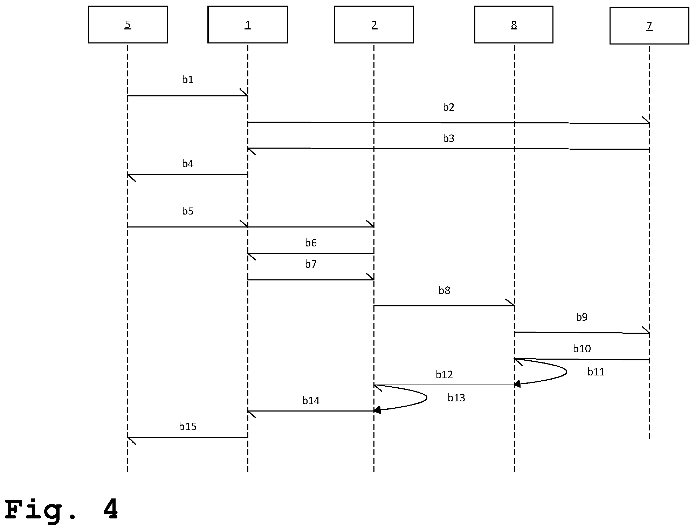

Fig. 4 zeigt ein schematisches Ablaufdiagramm eines Verfahrens zur Steuerung eines Schließmechanismus 2 mit einem mobilen Endgerät 1 bei der Ausführungsform gemäß Fig. 3 (Online-Verfahren). Die Schritte b1 bis b4 entsprechen den in Fig. 2 beschriebenen Schritten a1 bis a4, welche nur dann ablaufen, wenn am mobilen Endgerät 1 noch kein gültiger Schlüssel 10 vorhanden ist oder dessen Gültigkeitsdauer abgelaufen ist. Auch die Schritte b5 (Kontaktherstellun zwischen Benutzer 5, mobilem Endgerät 1 und Schließmechanismus 2) und b6 (Meldung der Identität des Schließmechanismus 2 an das mobile Endgerät 1) entsprechen den Schritten a5 und a6 des Ablaufs gemäß Fig. 2. Gemäß Verfahrensschritt b7 wird der Schließmechanismus 2 durch das mobile Endgerät 1 angestoßen. Danach wird vom Schließmechanismus 2 eine Autorisierungsanfrage an die Autorisierungsinstanz 8 gerichtet (Schritt b8) und der Identitätsnachweis gemäß Schritt b9 überprüft. In Schritt b10 bestätigt der zumindest eine Identitätsanbieter 7 die Identität an die Autorisierungsinstanz 8, welche die Zutrittsberechtigung überprüft (Schritt b11). In Schritt b12 erfolgt die Autorisierung des Schließmechanismus 2 durch die Autorisierungsinstanz 8. Die Überprüfung des Identitätsnachweises seitens der Autorisierungsinstanz 8 (Schritte b9 bis b11) kann auch entfallen, falls die Gültigkeit auf andere Art überprüft werden kann, z.B. anhand einer früheren Überprüfung oder einer digitalen Signatur. Der Schließmechanismus 2 prüft die Autorisierung und löst den Schließmechanismus 2 aus (Schritt b13) Danach kann noch der Erfolg an das mobile Endgerät gemeldet werden (Schritt b14) und eine entsprechende Information über die Benutzerschnittstelle 4 an den Benutzer 5 übermittelt werden und der Kontakt zwischen mobilem Endgerät 1 und dem Schließmechanismus 2 abgebrochen werden (Schritt b15).

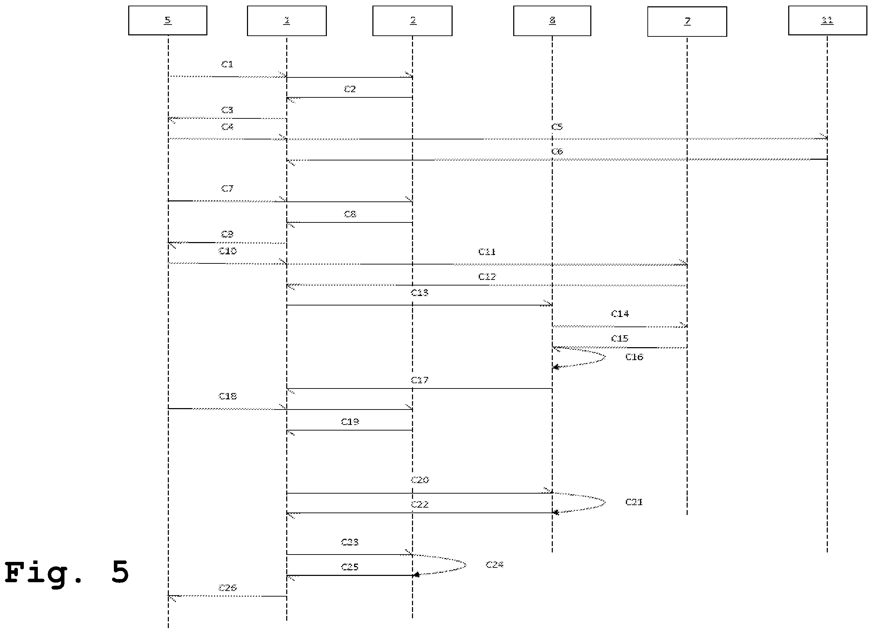

Schließlich zeigt Fig. 5 ein schematisches Ablaufdiagramm einer weiteren Ausführungsform eines erfindungsgemäßen Offline-Verfahrens zur Steuerung eines Schließmechanismus 2 mit einem mobilen Endgerät 1. In Schritt c1 bringt der Benutzer 5 das mobile Endgerät 1 in die Nähe des Schließmechanismus 2 sodass eine lokale Datenverbindung 3 hergestellt werden kann. Die explizite Aktivierung des Schließmechanismus 2 kann auch mittels einer physikalischen Interaktion des mobilen Endgeräts 1 ausgelöst werden (z.B. Drücken eines Bedienungselements, Drehen oder Bewegen des mobilen Endgeräts 1, etc.). Der Schließmechanismus 2 teilt dann dem mobilen Endgerät 1 seine Identität mit (Schritt c2). Dies kann je nach Art der lokalen Datenverbindung 3 über unterschiedliche Mechanismen erfolgen. Im Fall einer NFC Verbindung kann die Übertragung beispielsweise folgendermaßen ablaufen: Das mobile Endgerät 1 baut ein elektrisches Feld auf. Der Schließmechanismus 2 erkennt das elektrische Feld und gibt sich als NDEF-Tag aus (Emulationsmodus). Die zurückgegebenen Daten enthalten einen Hinweis auf die Identität des Schließmechanismus 2 sowie einen Hinweis für das mobile Endgerät 1, von wo allenfalls die notwendige Software bezogen werden kann. Der Schließmechanismus 2 generiert außerdem eine sogenannte Challenge, speichert diese lokal ab und gibt diese an das mobile Endgerät 1 zurück. Bei dieser Challenge handelt es sich um ein Datenpaket das derart erzeugt wird, dass bei jeder Kontaktherstellung eine neue Challenge erstellt wird. Es muss sichergesellt werden, dass der Inhalt einer erstellten Challenge möglichst selten dem Inhalt einer zuvor erstellten Challenge entspricht. Eine sinnvolle Implementierung der Erzeugung dieser Challenge wäre z.B. die Erzeugung einer pseudo-zufälligen Bytefolge mit einer Länge von 16 Bytes. Nach Erzeugung einer neuen Challenge wird die zuletzt generierte Challenge verworfen, es gibt also auf dem Schließmechanismus 2 immer nur eine aktuelle derartige Challenge. Diese wird verwendet um in weiterer Folge das mobile Endgerät gegenüber dem Schließmechanismus zu authentifizieren. Als zusätzliche Schutzmaßnahme kann die Identität des Schließmechanismus 2 in verschlüsselter Form zurückgegeben werden. Dafür wird der Datenblock, der die Identität enthält, um zufällig generierte Daten ergänzt. Der resultierende Datenblock wird so verschlüsselt, dass er nur von autorisierten Instanzen (v.a. dem Autorisierungsserver) entschlüsselt werden kann. Es eignen sich hierfür sowohl symmetrische als auch asymmetrische Verschlüsselungsverfahren. Bei Wahl eines geeigneten Verschlüsselungsverfahrens ist durch die Ergänzung der Identität mit zufälligen Daten gewährleistet, dass der zurückgegebene verschlüsselte Datenblock jedes Mal unterschiedlich ist. Für Beobachter, die nicht über den Entschlüsselungsschlüssel verfügen, wirkt der Datenblock zufällig und kann nicht für die wiederkehrende Identifikation des Schließmechanismus verwendet werden.

Das mobile Endgerät 1 analysiert den empfangenen Datenblock. Anhand des Hinweises auf die zu verwendende Software wird diese am mobilen Endgerät 1 gestartet (bei Kommunikation mit einem Android Endgerät über NFC kann das z.B. über einen Android Application Record erfolgen). Ist die entsprechende Software am mobilen Endgerät 1 nicht vorhanden, so soll dieses dazu veranlasst werden, einen Hinweis auf die Softwareinstallation anzuzeigen oder die Installation selbst zu initiieren und der Ablauf wird bei Schritt c3 fortgesetzt, ansonsten entfallen die Schritte c3 bis c8.

Gemäß Schritt c3 gibt das mobile Endgerät 1 dem Benutzer 5 über die Benutzerschnittstelle 4 entsprechende Informationen und beendet die lokale Datenverbindung 3 zum Schließmechanismus. Falls die Software auf dem mobilen Endgerät 1 beim Kontakt mit dem Schließmechanismus 2 noch nicht installiert ist und der Schließmechanismus 2 einen Hinweis darauf zurückliefert, wie im Falle des Fehlens der benötigten Software vom mobilen Endgerät 1 zu verfahren ist, kann das mobile Endgerät 1 diesen Hinweis befolgen und für den Benutzer die Installation der Software wesentlich vereinfachen. Die Art des Hinweises kann für unterschiedliche Typen von mobilen Endgeräten 1 unterschiedlich sein. Es können aus diesem Grund für die unterschiedlichen Typen von Schließmechanismen 2 unterschiedliche Hinweise ausgeliefert werden. So kann z.B. im Falle einer NFC Verbindung eine URL ausgeliefert werden, von der die Software bezogen werden kann die weitere Informationen anbietet, sobald sie in einem Web Browser geöffnet wird. Für mobile Endgeräte 1 mit dem Android Betriebssystem in Version >= 4.0 kann ein Android Application Record ausgeliefert werden, der das Betriebssystem veranlasst die jeweilige App zu starten oder alternativ, sollte diese noch nicht installiert sein, eine App zu starten, die die Softwareinstallation ermöglicht. Die Softwareinstallation selbst kann eine Interaktion des mobilen Endgerätes 1 mit dem Benutzer 5 erfordern, wie dies z.B. bei der Installation von Software auf Endgeräten mit Android Betriebssystem über die Google Play App der Fall ist. Vor oder während der Softwareinstallation wird die Verbindung zwischen dem mobilen Endgerät 1 und dem Schließmechanismus 2 typischer Weise getrennt. Im Falle einer NFC Verbindung kann die Verbindung nur über die Distanz von wenigen Zentimetern und oft nur über einen begrenzten Zeitraum aufrechterhalten werden. Da die Softwareinstallation meistens eine Benutzerinteraktion erfordert, wird der Benutzer 5 das mobile Endgerät 1 typischer Weise vom Schließmechanismus 2 entfernen um die Interaktion durchzuführen. Dadurch wird die Verbindung zum Schließmechanismus 2 getrennt. Außerdem dauert die Softwareinstallation in der Regel zu lange um die Verbindung aufrecht zu erhalten. Sollte die Verbindung abbrechen, beginnt das Verfahren nach erfolgreicher Softwareinstallation und erneutem Kontakt zwischen Schließmechanismus 2 und mobilem Endgerät 1 von vorne. Sollte die Verbindung zum Schließmechanismus 2 jedoch über eine lokale Datenverbindung 3 erfolgen, die eine längerfristige und lokal weiteräumigere Verbindung erlaubt, ist ein Verbindungsabbruch nicht zwingend notwendig. Das generelle Verfahren ist von diesem Detail unabhängig.

Nach erfolgter Softwareinstallation bringt der Benutzer 5 das mobile Endgerät 1 erneut in die Nähe des Schließmechanismus 2 sodass eine lokale Datenverbindung 3 hergestellt werden kann (Schritt c7). Wie bereits oben erwähnt, kann die explizite Aktivierung des Schließmechanismus 2 auch mit einer physikalischen Interaktion verbunden sein (Drücken eines Bedienungselements, Drehen oder Bewegen des mobilen Endgeräts 1) .

In Schritt c8 sendet der Schließmechanismus 2 erneut Identifikationsdaten an das mobile Endgerät 1 (siehe Schritt c2). Dieses Mal wird die zuvor installierte Software am mobilen Endgerät 1 automatisch gestartet.

Die Schritte c3 bis c8 laufen nur dann ab, wenn die Software am mobilen Endgerät 1 noch nicht installiert war.

Die Software am mobilen Endgerät 1 überprüft nun, ob ein gültiger Authentifizierungsschlüssel für die Authentifizierung gegenüber der Autorisierungsinstanz vorhanden ist. Ist dies nicht der Fall, wird der Benutzer 5 darüber informiert, indem ein Anmeldedialog eingeblendet wird (Schritte c9 und c10), ansonsten werden die Schritte c9 bis c19 übersprungen.

Wie während der Softwareinstallation wird in aller Regel auch während des Authentifizierungsprozesses die Verbindung zwischen Schließmechanismus 2 und mobilem Endgerät 1 getrennt.

Gemäß Schritt c11 wählt der Benutzer 5 im Authentifizierungsprozess einen der Identitätsanbieter 7, denen die Autorisierungsinstanz 8 vertraut. Die Authentifizierungssequenz kann z.B. über einen Webbrowser ablaufen. Beispiele für derartige Authentifizierungsverfahren sind OpenID und Google Identity Toolkit. In einem solchen Fall kann die Auswahl der Identitätsanbieter 7 über eine Webseite erfolgen, die von der Autorisierungsinstanz 8 bereitgestellt wird, sie kann aber auch über lokal am mobilen Endgerät 1 gespeicherte Daten erfolgen. Als Ergebnis einer erfolgreichen Authentifizierung übermittelt der Identitätsanbieter 7 an das mobile Endgerät 1 einen Datenblock, der geeignet ist, den authentifizierten Benutzer eindeutig zu identifizieren, entweder indem der Datenblock erneut zum Identitätsanbieter 7 gesendet wird und dieser Benutzerinformation zurückliefert, oder indem der Datenblock vom Identitätsanbieter 7 digital signiert wurde, sodass darauf vertraut werden darf, dass dieser vom Identitätsanbieter 7 stammt und nicht manipuliert wurde (Schritt c12).

Gemäß Verfahrensschritt c13 erfolgt die Übermittlung des zuvor vom Identitätsanbieter 7 erhaltenen Identitätsnachweises vom mobilen Endgerät 1 zur Autorisierungsinstanz 8 entweder automatisch über den Webbrowser oder explizit über die Anwendungssoftware am mobilen Endgerät 1. Sollte die Authentifizierungssequenz über einen Webbrowser ablaufen, kann die Weiterleitung des Identitätsnachweises an die Autorisierungsinstanz 8 über einen HTTP Redirect erfolgen. Alternativ kann die Software am mobilen Endgerät 1 den Identitätsnachweis explizit ausgelesen und über ein geeignetes Verfahren an die Autorisierungsinstanz 8 übermittelt werden. In jedem Fall ist es essenziell, dass die Übertragung des Identitätsnachweises derart erfolgt, dass die Vertraulichkeit gewahrt bleibt (z.B. durch SSL Verschlüsselung im Fall einer HTTPS Verbindung).

In den Schritten c14 bis c17 überprüft die Autorisierungsinstanz 8 die Gültigkeit des Identitätsnachweises. Dies erfolgt entweder derart, dass der Identitätsnachweis an den Identitätsanbieter 7 übermittelt wird und dessen Bestätigung über die Echtheit sowie gegebenenfalls zusätzliche Benutzerdaten abgewartet werden oder derart, dass die digitale Signatur des Identitätsnachweises überprüft wird. In jedem Fall muss an die Autorisierungsinstanz 8 eine für den jeweiligen Identitätsanbieter 7 eindeutige Benutzeridentifikation übermittelt werden. Dies kann im ersten Fall als Teil des Überprüfungsergebnisses vom Identitätsanbieter 7 oder im zweiten Fall als Teil des signierten Identitätsnachweises selbst erfolgen. Kann die Gültigkeit des Identitätsnachweises nicht festgestellt werden, wird der weitere Ablauf des Verfahrens abgebrochen. Im Speziellen werden dem Benutzer 5 bzw. der anfragenden Gegenstelle, keine Zugriffsrechte gewährt. Die Benutzeridentifikation enthält einen menschenlesbaren, vertrauenswürdigen Teil, anhand dessen eine Person, die Zutrittsberechtigungen gewährt (der Administrator), den jeweiligen Benutzer 5 eindeutig erkennen kann. Dieser Teil kann z.B. die E-Mail Adresse des Benutzers 5 sein, die vom Identitätsanbieter 7 überprüft wurde. Es dürfen zum Zweck der manuellen Identifikation jedenfalls nur solche Merkmale herangezogen werden, die vom Identitätsanbieter 7 als vertrauenswürdig eingestuft werden, sodass keine fälschliche Verwechslung von Benutzern 5 passieren kann. Der Vor- und Nachname eines Benutzers 5 kann in vielen Fällen (z.B. bei öffentlichen Identitätsanbietern 7 wie Google) nicht als vertrauenswürdig eingestuft werden, da diese vom Identitätsanbieter 7 nicht überprüft werden. In anderen Fällen, z.B. falls als Identitätsanbieter 7 der LDAP Server einer Firma genutzt wird, dessen Daten nur von vertrauenswürdigem Personal gepflegt werden kann, sind diese Daten sehr wohl als vertrauenswürdig anzusehen. Die Benutzeridentifikation enthält auch einen maschinenlesbaren, unveränderlichen Teil, der für die wiederkehrende Identifikation eines Benutzers 5 verwendet werden kann. Der unveränderliche Teil kann identisch mit dem benutzerlesbaren Teil sein, muss es aber nicht. So könnte sich z.B. E-Mail Adresse eines Benutzers 5 durchaus ändern, während der Benutzer 5 selbst und somit seine maschinenlesbare, unveränderliche Identifikation, der gleiche bleibt. Nach erfolgreicher und glaubhafter Überprüfung des Identitätsnachweises überprüft die Autorisierungsinstanz 8, ob in der Benutzerdatenbank bereits ein Eintrag existiert, der dem neu authentifizierten Benutzer 5 entspricht. Dies kann im Detail folgendermaßen erfolgen:
Es wird überprüft, ob ein bestehender Eintrag mit der unveränderlichen Benutzeridentifikation besteht, der vom gleichen Identitätsanbieter überprüft wurde. Sollte dies der Fall sein, wird angenommen, dass der Eintrag dem neu authentifizierten Benutzer 5 entspricht und im Falle einer Änderung von Daten des Benutzers 5, werden diese aktualisiert. Wird kein derartiger Eintrag gefunden, wird in der Benutzerdatenbank nach einem Eintrag gesucht, der vom jeweiligen Identitätsanbieter 7 überprüft wurde und dessen Benutzeridentifikation einen menschenlesbaren Teil aufweist, der dem des neu authentifizierten Benutzers 5 entspricht. Ist dies der Fall wird angenommen, dass es sich um einen Eintrag handelt, der dem neu authentifizierten Benutzer 5 entspricht. Dieser Fall könnte eintreten, falls ein Benutzer 5 von einem Administrator in der Datenbank angelegt wurde, bevor dieser sich über einen Identitätsanbieter 7 authentifiziert hat. Dies kann sinnvoll sein, falls einem Benutzer 5 Zutrittsberechtigungen erteilt werden, bevor dieser das beschriebene Verfahren erstmals nutzt. In diesem Fall würde der Administrator 9 lediglich den menschenlesbaren Teil der Benutzeridentifikation kennen (z.B. dessen E-Mail Adresse), nicht jedoch den maschinenlesbaren, unveränderlichen Teil. In diesem Fall darf der gefunden Datensatz also keinen permanenten, maschinenlesbaren Teil aufweisen. Tut er dies doch, ist dies ein Fehlerfall, der entsprechend zu behandeln ist. Wird kein bestehender Datensatz für den neu authentifizierten Benutzer 5 gefunden, wird dieser neu angelegt. Der beschriebene Mechanismus zur Anlage bzw. Wiedererkennung eines authentifizierten Benutzers 5 ist ein Implementierungsbeispiel, das in konkreten Implementierungen auch anders und ggf. sicherer umgesetzt werden kann. Für den neu authentifizierten Benutzer 5 wird ein geheimer, sicherer Authentifizierungsschlüssel generiert, über den sich dessen mobiles Endgerät 1 bei zukünftigen Anfragen authentifizieren kann, ohne erneut den beschriebenen Authentifizierungsprozess über den Identitätsanbieter 7 abwickeln zu müssen. Dieser Authentifizierungsschlüssel kann der vom Identitätsanbieter 7 übermittelte Datenblock sein, falls dieser mehrfach validiert werden kann. Es kann auch ein geheimer Schlüssel sein, der für einen Benutzer 5 einmalig generiert wird und dann an jedes mobile Endgerät 1 ausgegeben wird, an dem sich der jeweilige Benutzer 5 anmeldet. In aller Regel wird jedoch bei jeder Neuauthentifizierung des Benutzers 5 ein neuer Authentifizierungsschlüssel generiert. Der Authentifizierungsschlüssel kann z.B. eine pseudo-zufällige Folge von 128 Bytes sein erzeugt werden kann. Der Authentifizierungsschlüssel wird mit einem Ablaufdatum versehen. Nach diesem Ablaufdatum kann der Schlüssel nicht mehr für den Zugriff auf die Autorisierungsinstanz verwendet werden und es muss ein neuer Authentifizierungsprozess durchlaufen werden. Der Authentifizierungsschlüssel wird zusammen mit dem Gültigkeitsdatum und einer eindeutigen Identifikation des Benutzers 5 in der Datenbank der Autorisierungsinstanz gespeichert. Alternativ können diese Daten auch in ein Datenpaket zusammengefasst und von der Autorisierungsinstanz 8 digital signiert werden. Im ersten Fall wird der generierte Authentifizierungsschlüssel selbst und das zugehörige Ablaufdatum, im zweiten Fall das signierte Datenpaket an das mobile Endgerät 1 übermittelt. Die Übermittlung muss auf jeden Fall vertraulich erfolgen. Das mobile Endgerät 1 speichert die erhaltenen Authentifizierungsdaten lokal ab, sodass diese für nachfolgende Anfragen verwendet werden können. Die Speicherung muss möglichst so erfolgen, dass kein unautorisierter Zugriff darauf ermöglicht wird.

Nach erfolgter Authentifizierung bringt der Benutzer 5 das mobile Endgerät 1 erneut in die Nähe des Schließmechanismus 2 sodass eine lokale Datenverbindung 3 hergestellt werden kann (Schritt c18). Dabei kann wiederum die explizite Aktivierung des Schließmechanismus 2 mittels physikalischer Interaktion des mobilen Endgeräts involviert sein. In Schritt c19 wird die Identität des Schließmechanismus 2 an das mobile Endgerät geschickt (siehe Schritt c2 und c8).

Die Autorisierung gegenüber dem Schließmechanismus 2 erfolgt über ein Zutrittszertifikat, das von der Autorisierungsinstanz für den jeweiligen Schließmechanismus 2 jeweils gesondert ausgestellt wird (Schritt c19). Das mobile Endgerät 1 überprüft, ob es bereits über ein solches Zutrittszertifikat verfügt. Ist dies der Fall, werden die Schritte c20 bis c22 übersprungen. Andernfalls fordert die Software am mobilen Endgerät 1 dieses von der Autorisierungsinstanz 8 an (Schritt c20). Zu diesem Zweck wird eine Anfrage mit der Identitätsinformation des Schließmechanismus 2 an die Autorisierungsinstanz 8 versandt. Das mobile Endgerät 1 muss sich später bei der Kommunikation mit dem Schließmechanismus 2 mit einem eigenen Schlüssel authentifizieren. Damit der Schließmechanismus 2 diesem Schlüssel vertrauen kann, muss auch dieser von der Autorisierungsinstanz 8 signiert werden. Zu diesem Zweck eigenen sich sowohl symmetrische als auch asymmetrische Verfahren, wobei asymmetrische Verfahren in der Regel als sicherer betrachtet werden können. Bei symmetrischen Verfahren können zusätzliche Maßnehmen zur Sicherstellung der Vertraulichkeit ergriffen werden. In diesem Dokument wird in weiterer Folge von der Verwendung eines asymmetrischen kryptografischen Verfahrens ausgegangen. In diesem Fall wird von der Software am mobilen Endgerät 1 ein Schlüsselpaar aus privatem und öffentlichem Schlüssel erzeugt (in weiterer Folge privater und öffentlicher Signaturschlüssel des mobilen Endgeräts 1 bezeichnet). Der öffentliche Schlüssel wird mit der Anfrage zur Schlüsselausstellung mit an die Autorisierungsinstanz 8 versandt. Zur Authentifizierung der Anfrage gegenüber der Autorisierungsinstanz 8 wird des Weiteren der zuvor erhaltene Authentifizierungsschlüssel mitgesandt. Dieser kann auf verschiedenste Weisen mitgesandt werden. Wichtig ist in jedem Fall (wie bei den meisten Datenverbindungen im beschriebenen Verfahren), dass die Vertraulichkeit gewahrt bleibt. Alternativ zum Mitsenden des Authentifizierungsschlüssels kann dieser auch verwendet werden um die Anfrage digital zu signieren.

Der vom mobilen Endgerät 1 übermittelte Authentifizierungsschlüssel wird in Schritt c22 von der Autorisierungsinstanz 8 in deren Datenbank gesucht, wird ein solcher gefunden, wird der Gültigkeitszeitraum überprüft. Wird der Authentifizierungsschlüssel nicht gefunden oder ist dieser abgelaufen (oder noch nicht gültig) wird die Ausstellung eines Zutrittsschlüssels verweigert und das weitere Verfahren wird abgebrochen.

Ansonsten wird in der Datenbank der Autorisierungsinstanz 8 überprüft, ob der Benutzer 5, für den der empfangene Authentifizierungsschlüssel ausgestellt wurde, Zutritt zum angefragten Schließmechanismus 2 erhalten soll. Ist dies nicht der Fall, so wird das Verfahren abgebrochen. Ansonsten wird ein Datenpaket erstellt, das die Rahmenbedingungen des gewährten Zutritts beschreibt. Diese enthalten zumindest die Identität des einen oder mehrerer Schließmechanismen 2, eine Zeitangabe, bis wann der Schlüssel gültig ist und den öffentlichen Signaturschlüssel des mobilen Endgerätes 1.

Optional können auch noch weitere Angaben enthalten sein, wie z.B. tägliche Zeitfenster, in denen Zutritt gewährt wird, etc.

Das Datenpaket wird mit einem kryptografischen Verfahren so bearbeitet, dass vom Schließmechanismus 2 zuverlässig festgestellt werden kann, dass es von der Autorisierungsinstanz 8 oder einer anderen vertrauenswürdigen Instanz ausgestellt wurde. Für diesen Zweck eignen sich sowohl symmetrische als auch asymmetrische Verfahren. Das signierte und verschlüsselte Datenpaket (wird in weiterer Folge Zutrittszertifikat genannt) wird zurück an das mobile Endgerät 1 gesandt.

Zur Auslösung des Schließmechanismus 2 erstellt die Software am mobilen Endgerät 1 ein Datenpaket mit folgendem Inhalt (Schritt c23) :
- Zutrittszertifikat wie zuvor von der Autorisierungsinstanz 8 erhalten
- Challenge wie zuletzt vom Schließmechanismus 2 erhalten. Die Software am mobilen Endgerät 1 signiert dieses Datenpaket mit dem privaten Signaturschlüssel des mobilen Endgeräts 1. Das signierte Datenpaket wird an den Schließmechanismus 2 übermittelt. Im Falle einer Datenübertragung mittels NFC kann das Datenpaket z.B. als NDEF APDU übermittelt werden.

Gemäß Schritt c24 überprüft der Schließmechanismus 2, ob die im empfangenen Datenpaket enthaltene Challenge der zuletzt vom Schließmechanismus 2 ausgegebenen entspricht. Ist dies nicht der Fall, wird der Vorgang abgebrochen. Ansonsten wird das Zutrittszertifikat ausgelesen. Sollte dieses verschlüsselt sein, würde dieses nun mit dem eigenen privaten Schlüssel (oder im Falle einer symmetrischen Verschlüsslung mit dem symmetrischen Schlüssel) entschlüsselt. Würde diese Entschlüsselung fehlschlagen, würde der Vorgang abgebrochen. Es wird überprüft, ob die Signatur des Zutrittszertifikates mit dem privaten Schlüssel der Autorisierungsinstanz erstellt wurde. Zu diesem Zweck verwendet der Schließmechanismus 2 den öffentlichen Schlüssel der Autorisierungsinstanz 8, der am Schließmechanismus 2 vorliegt. Kann die Gültigkeit der Signatur nicht festgestellt werden, wird der Vorgang abgebrochen. Aus dem unverschlüsselten Zutrittszertifikat wird nun der öffentliche Signaturschlüssel des mobilen Endgerätes 1 ausgelesen. Mit dessen Hilfe wird überprüft, ob die Signatur des vom mobilen Endgerät 1 empfangenen Datenpaketes mit dem privaten Signaturschlüssel des mobilen Endgerätes 1 erstellt wurde. Ist dies nicht der Fall, wird der Vorgang abgebrochen. Es wird überprüft, ob in dem Zutrittszertifikat die eigene ID des Schließmechanismus 2 in der Liste der zu öffnenden Schließmechanismen 2 enthalten ist. Ist dies nicht der Fall, wird der Vorgang abgebrochen. Ansonsten werden die Rahmenbedingungen ausgelesen (v.a. Ablaufdatum des Zertifikates bzw. die gewährten Zeiträume), unter denen der die Auslösung des Zutrittsmechanismus gestattet ist. Sind diese Rahmenbedingungen gegeben, wird der Schließmechanismus 2 ausgelöst, ansonsten wird der Vorgang abgebrochen.

Nach erfolgter oder nicht erfolgter Betätigung des Schließmechanismus 2 meldet der Schließmechanismus 2 den Erfolg oder Misserfolg an das mobile Endgerät 1 damit dieses den Benutzer 5 entsprechend informieren kann (Schritt c25).

## Patentansprüche

1. Verfahren zur Steuerung eines Schließmechanismus (2) durch einen Benutzer (5) mit einem mobilen Endgerät (1), wobei zum Steuern des Schließmechanismus (2) vom mobilen Endgerät (1) eine lokale Datenverbindung (3) zum Schließmechanismus (2) aufgebaut wird, und zum Ausstellen eines Schlüssels (10) eine Authentifizierungsinformation vom mobilen Endgerät (1) an eine Autorisierungsinstanz (8) in einem Netzwerk (6) gesendet wird, und nach Überprüfung der Authentizität der Authentifizierungsinformation bei der Autorisierungsinstanz (8) der Schlüssel (10) zum Öffnen des Schließmechanismus (2) ausgestellt wird, mit welchem Schlüssel (10) der Schließmechanismus (2) geöffnet wird, **dadurch gekennzeichnet, dass** die Authentifizierungsinformation eine für einen von der Autorisierungsinstanz (8) verschiedenen Identitätsanbieter (7) eindeutige, geräteübergreifende virtuelle Identität authentifiziert, wobei zum Erhalt der Authentifizierungsinformation mit dem mobilen Endgerät (1) eine Verbindung über ein Netzwerk (6) zu dem Identitätsanbieter (7) hergestellt wird, sich der Benutzer (5) mit Hilfe des mobilen Endgeräts (1) an dem Identitätsanbieter (7) für die virtuelle Identität authentifiziert und daraufhin vom Identitätsanbieter (7) die Authentifizierungsinformation an das mobile Endgerät (1) gesendet wird, wobei die Autorisierungsinstanz eine zur Ausstellung des Schlüssels (10) erforderliche Zutritts- bzw. Zugriffsberechtigung an die virtuelle Identität bindet.

2. Steuerungsverfahren nach Anspruch 1, **dadurch gekennzeichnet, dass** der Schließmechanismus (2) mit einem Smartphone, einem Rechner oder dgl. gesteuert wird.

3. Steuerungsverfahren nach einem der Ansprüche 1 oder 2, **dadurch gekennzeichnet, dass** zum Steuern des Schließmechanismus (2) vom mobilen Endgerät (1) eine Nahfeld-Kommunikations (NFC)-Verbindung, eine Hochfrequenzverbindung, eine Bluetooth-Verbindung und bzw. oder eine WLAN-Verbindung als lokale Datenverbindung (3) zum Schließmechanismus (2) aufgebaut wird.

4. Steuerungsverfahren nach einem der Ansprüche 1 bis 3, **dadurch gekennzeichnet, dass** der Schlüssel (10) zum Öffnen des Schließmechanismus (2) von der Autorisierungsinstanz (8) an das mobile Endgerät (1) übermittelt wird.

5. Steuerungsverfahren nach einem der Ansprüche 1 bis 4, **dadurch gekennzeichnet, dass** eine Verbindung zwischen dem Schließmechanismus (2) und der Autorisierungsinstanz (8) über ein Netzwerk (6) aufgebaut wird, und der Schlüssel (10) zum Öffnen des Schließmechanismus (2) von der Autorisierungsinstanz (8) direkt an den Schließmechanismus (2) übermittelt wird.

6. Steuerungsverfahren nach einem der Ansprüche 1 bis 5, **dadurch gekennzeichnet, dass** vor der Öffnung des Schließmechanismus (2) zusätzliche vorgegebene Bedingungen, insbesondere zeitliche Vorgaben, abgefragt werden.

7. Steuerungsverfahren nach einem der Ansprüche 1 bis 6, **dadurch gekennzeichnet, dass** der Aufbau der lokalen Datenverbindung (3) zwischen dem mobilen Endgerät (1) und dem Schließmechanismus (2) durch eine physikalische Interaktion mit dem mobilen Endgerät (1), beispielsweise die Betätigung eines Bedienungselements am mobilen Endgerät (1) oder die Ausführung einer Bewegung mit dem mobilen Endgeräts (1) in die Nähe des Schließmechanismus (2), ausgelöst wird.

8. Steuerungsverfahren nach einem der Ansprüche 1 bis 7, **dadurch gekennzeichnet, dass** vom Schließmechanismus (2) ein Datenpaket mit einer eindeutigen Identifikation an das mobile Endgerät (1) gesendet wird, insbesondere unmittelbar nach dem Aufbau der lokalen Datenverbindung (3).

9. Steuerungsverfahren nach Anspruch 8, **dadurch gekennzeichnet, dass** die eindeutige Identifikation des Schließmechanismus in verschlüsselter Form an das mobile Endgerät (1) gesendet wird.

10. Vorrichtung zur Steuerung eines Schließmechanismus (2) durch einen Benutzer (5) mit einem mobilen Endgerät (1), welches eine Benutzerschnittstelle (4), Mittel zur Herstellung einer lokalen Datenverbindung (3) und Mittel zur Herstellung einer Verbindung zu mindestens einem Netzwerk (6) aufweist, wobei der Schließmechanismus (2) mit der lokalen Datenverbindung (3) verbindbar ist, wobei eine mit einem Netzwerk (6) verbindbare Autorisierungsinstanz (8) vorgesehen ist und die Autorisierungsinstanz (8) zur Ausstellung eines Schlüssels (10) nach Aussendung einer Authentifizierungsinformation vom mobilen Endgerät (1) an die Autorisierungsinstanz (8) im Netzwerk (6) und nach Überprüfung der Authentizität der Authentifizierungsinformation ausgebildet ist, mit welchem Schlüssel (10) der Schließmechanismus (2) öffenbar ist, **dadurch gekennzeichnet, dass** ein mit dem Netzwerk (6) verbindbarer, von der Autorisierungsinstanz (8) verschiedener Identitätsanbieter (7) vorgesehen ist und die Authentifizierungsinformation eine für den Identitätsanbieter (7) eindeutige, geräteübergreifende virtuelle Identität authentifiziert, wobei der Identitätsanbieter (7) zur Aussendung einer Authentifizierungsinformation vom Identitätsanbieter (7) an das mobile Endgerät (1) eingerichtet ist, und das mobile Endgerät (1) zur Anmeldung beim Identitätsanbieter (7) ausgebildet ist, wobei eine Zutritts- bzw. Zugriffsberechtigung zur Ausstellung des Schlüssels (10) durch die Autorisierungsinstanz (8) an die virtuelle Identität gebunden ist.

11. Steuerungsvorrichtung nach Anspruch 10, **dadurch gekennzeichnet, dass** das mobile Endgerät (1) durch ein Smartphone, einen Rechner oder dgl. gebildet ist.

12. Steuerungsvorrichtung nach Anspruch 10 oder 11, **dadurch gekennzeichnet, dass** die Mittel zur Herstellung der lokalen Datenverbindung (3) durch einen Nahfeld-Kommunikations (NFC)-Sender, einen RFID-Transponder, einen Bluetooth-Sender und bzw. oder durch einen WLAN-Router gebildet ist.

13. Steuerungsvorrichtung nach einem der Ansprüche 10 bis 12, **dadurch gekennzeichnet, dass** das mobile Endgerät (1) zum Empfang des Schlüssels (10) von der Autorisierungsinstanz (8) ausgebildet ist.

14. Steuerungsvorrichtung nach einem der Ansprüche 10 bis 13, **dadurch gekennzeichnet, dass** der Schließmechanismus (2) Mittel zur Verbindung mit der Autorisierungsinstanz (8) über ein Netzwerk (6) aufweist, sodass der Schlüssel (10) zum Öffnen des Schließmechanismus (2) von der Autorisierungsinstanz (8) direkt an den Schließmechanismus (2) übermittelbar ist.

15. Steuerungsvorrichtung nach einem der Ansprüche 10 bis 14, **dadurch gekennzeichnet, dass** die Übermittlung des Schlüssels (10) zum Öffnen des Schließmechanismus (2) von zusätzlichen Bedingungen, insbesondere zeitlichen Vorgaben, abhängig ist.

16. Steuerungsvorrichtung nach einem der Ansprüche 10 bis 15, **dadurch gekennzeichnet, dass** die Benutzerschnittstelle (4) des mobilen Endgeräts (1) durch einen Touchscreen oder durch eine Sprachsteuerung gebildet ist.

## Claims

1. Method for control of a locking mechanism (2) by a user (5) by means of a mobile terminal (1), a local data connection (3) to the locking mechanism (2) being established by the mobile terminal (1) in order to control the locking mechanism (2), and a piece of authentication information being sent from the mobile terminal (1) to an authorisation entity (8) in a network (6) in order to issue a key (10), and after checking the authenticity of the authentication information at the authorisation entity (8), the key (10) for opening the locking mechanism (2) being issued, by means of which key (10) the locking mechanism (2) is opened, **characterised in that** the authentication information authenticates a cross-device virtual identity that is unique to an identity provider (7) that is different from the authorisation entity (8), and, in order to obtain the authentication information by means of the mobile terminal (1), a connection to the identity provider (7) being established via a network (6), the user (5) authenticating himself with the aid of the mobile terminal (1) at the identity provider (7) for the virtual identity and then the identity provider (7) sending the authentication information to the mobile terminal (1), the authorisation entity binding an entry or access authorisation required for issuing the key (10) to the virtual identity.

2. Control method according to claim 1, **characterised in that** the locking mechanism (2) is controlled by means of a smartphone, a computer or the like.

3. Control method according to either claim 1 or claim 2, **characterised in that** the mobile terminal (1) establishes a near-field communication (NFC) connection, a radio-frequency connection, a Bluetooth connection and/or a Wi-Fi connection as a local data connection (3) to the locking mechanism (2) in order to control the locking mechanism (2).

4. Control method according to any of claims 1 to 3, **characterised in that** the key (10) for opening the locking mechanism (2) is transmitted from the authorisation entity (8) to the mobile terminal (1).

5. Control method according to any of claims 1 to 4, **characterised in that** a connection between the locking mechanism (2) and the authorisation entity (8) is established via a network (6), and the key (10) for opening the locking mechanism (2) is transmitted from the authorisation entity (8) directly to the locking mechanism (2).

6. Control method according to any of claims 1 to 5, **characterised in that**, prior to the opening of the locking mechanism (2), additional predetermined conditions, in particular time specifications, are queried.

7. Control method according to any of claims 1 to 6, **characterised in that** the establishment of the local data connection (3) between the mobile terminal (1) and the locking mechanism (2) is triggered by a physical interaction with the mobile terminal (1), for example the operation of an operating element on the mobile terminal (1) or the execution of a movement with the mobile terminal (1) in the vicinity of the locking mechanism (2).

8. Control method according to any of claims 1 to 7, **characterised in that** a data packet with a unique identification is sent from the locking mechanism (2) to the mobile terminal (1), in particular immediately after the local data connection (3) is established.

9. Control method according to claim 8, **characterised in that** the unique identification of the locking mechanism is sent in encrypted form to the mobile terminal (1).

10. Device for control of a locking mechanism (2) by a user (5) by means of a mobile terminal (1) which has a user interface (4), means for establishing a local data connection (3) and means for establishing a connection to at least one network (6), the locking mechanism (2) being connectable to the local data connection (3), an authorisation entity (8) being provided which is connectable to a network (6) and the authorisation entity (8) being designed to issue a key (10) after a piece of authentication information is sent from the mobile terminal (1) to the authorisation entity (8) in the network (6) and after the authenticity of the authentication information is checked, by means of which key (10) the locking mechanism (2) can be opened, **characterised in that** an identity provider (7) which can be connected to the network (6) and is different from the authorisation entity (8) is provided and the authenticator information authenticates a cross-device virtual identity that is unique to the identity provider (7), the identity provider (7) being designed to send a piece of authentication information from the identity provider (7) to the mobile terminal (1), and the mobile terminal (1) being designed to register with the identity provider (7), with an entry or access authorisation for issuing the key (10) being bound to the virtual identity by the authorisation entity (8).

11. Control device according to claim 10, **characterised in that** the mobile terminal (1) is formed by a smartphone, a computer or the like.

12. Control device according to either claim 10 or claim 11, **characterised in that** the means for establishing the local data connection (3) is formed by a near-field communication (NFC) transmitter, an RFID transponder, a Bluetooth transmitter and/or by a Wi-Fi router.

13. Control device according to any of claims 10 to 12, **characterised in that** the mobile terminal (1) is designed to receive the key (10) from the authorisation entity (8).

14. Control device according to any of claims 10 to 13, **characterised in that** the locking mechanism (2) has means for connecting to the authorisation entity (8) via a network (6), so that the key (10) for opening the locking mechanism (2) can be transmitted from the authorisation entity (8) directly to the locking mechanism (2).

15. Control device according to any of claims 10 to 14, **characterised in that** the transmission of the key (10) for opening the locking mechanism (2) is dependent on additional conditions, in particular time specifications.

16. Control device according to any of claims 10 to 15, **characterised in that** the user interface (4) of the mobile terminal (1) is formed by a touchscreen or by voice control.

## Revendications

1. Procédé pour la commande d'un mécanisme de fermeture (2) par un utilisateur (5) avec un terminal mobile (1), dans lequel, pour la commande du mécanisme de fermeture (2), une liaison de données locale (3) avec le mécanisme de fermeture (2) est établie par le terminal mobile (1), et pour la délivrance d'une clé (10), une information d'authentification est envoyée par le terminal mobile (1) à une instance d'autorisation (8) dans un réseau (6), et après vérification de l'authenticité de l'information d'authentification auprès de l'instance d'autorisation (8), la clé (10) est délivrée pour l'ouverture du mécanisme de fermeture (2), clé (10) avec laquelle le mécanisme de fermeture (2) est ouvert, **caractérisé en ce que** l'information d'authentification authentifie une identité virtuelle pour tous les terminaux univoque pour un fournisseur d'identité (7) différent de l'instance d'autorisation (8), dans lequel, pour l'obtention de l'information d'authentification, une connexion au fournisseur d'identité (7) est établie par l'intermédiaire d'un réseau (6) avec le terminal mobile (1), l'utilisateur (5) s'authentifie à l'aide du terminal mobile (1) au niveau du fournisseur d'identité (7) pour l'identité virtuelle et après cela l'information d'authentification est envoyée par le fournisseur d'identité (7) au terminal mobile (1), dans lequel l'instance d'autorisation lie une autorisation d'entrée ou d'accès nécessaire à la délivrance de la clé (10) à l'identité virtuelle.

2. Procédé de commande selon la revendication 1, **caractérisé en ce que** le mécanisme de fermeture (2) est commandé avec un smartphone, un ordinateur ou similaire.

3. Procédé de commande selon l'une quelconque des revendications 1 ou 2, **caractérisé en ce que**, pour la commande du mécanisme de fermeture (2), une connexion de communication en champ proche (NFC), une connexion haute fréquence, une connexion Bluetooth et/ou une connexion WLAN est établie en tant que liaison de données locale (3) avec le mécanisme de fermeture (2) par le terminal mobile (1).

4. Procédé de commande selon l'une quelconque des revendications 1 à 3, **caractérisé en ce que** la clé (10), pour l'ouverture du mécanisme de fermeture (2), est transmise par l'instance d'autorisation (8) au terminal mobile (1).

5. Procédé de commande selon l'une quelconque des revendications 1 à 4, **caractérisé en ce qu'**une connexion entre le mécanisme de fermeture (2) et l'instance d'autorisation (8) est établie par l'intermédiaire d'un réseau (6), et la clé (10), pour l'ouverture du mécanisme de fermeture (2), est transmise directement au mécanisme de fermeture (2) par l'instance d'autorisation (8).

6. Procédé de commande selon l'une quelconque des revendications 1 à 5, **caractérisé en ce que**, avant l'ouverture du mécanisme de fermeture (2), des conditions prédéfinies supplémentaires, en particulier des spécifications temporelles, sont interrogées.

7. Procédé de commande selon l'une quelconque des revendications 1 à 6, **caractérisé en ce que** l'établissement de la liaison de données locale (3) entre le terminal mobile (1) et le mécanisme de fermeture (2) est déclenché par une interaction physique avec le terminal mobile (1), par exemple l'actionnement d'un élément de commande utilisateur sur le terminal mobile (1) ou la réalisation d'un déplacement avec le terminal mobile (1) à proximité du mécanisme de fermeture (2).

8. Procédé de commande selon l'une quelconque des revendications 1 à 7, **caractérisé en ce qu'**un paquet de données avec une identification univoque est envoyé par le mécanisme de fermeture (2) au terminal mobile (1), en particulier immédiatement après l'établissement de la liaison de données locale (3).

9. Procédé de commande selon la revendication 8, **caractérisé en ce que** l'identification univoque du mécanisme de fermeture sous forme chiffrée est envoyée au terminal mobile (1).

10. Dispositif pour la commande d'un mécanisme de fermeture (2) par un utilisateur (5) avec un terminal mobile (1), lequel présente une interface utilisateur (4), des moyens pour l'établissement d'une liaison de données locale (3) et des moyens pour l'établissement d'une connexion à au moins un réseau (6), dans lequel le mécanisme de fermeture (2) peut être connecté à la liaison de données locale (3), dans lequel une instance d'autorisation (8) pouvant être connectée à un réseau (6) est prévue et l'instance d'autorisation (8) est réalisée pour délivrer une clé (10) après envoi d'une information d'authentification par le terminal mobile (1) à l'instance d'autorisation (8) dans le réseau (6) et après vérification de l'authenticité de l'information d'authentification, clé (10) avec laquelle le mécanisme de fermeture (2) peut être ouvert, **caractérisé en ce qu'**un fournisseur d'identité (7) pouvant être connecté au réseau (6), différent de l'instance d'autorisation (8), est prévu et l'information d'authentification authentifie une identité virtuelle pour tous les terminaux univoque pour le fournisseur d'identité (7), dans lequel le fournisseur d'identité (7) est réalisé pour envoyer une information d'authentification du fournisseur d'identité (7) au terminal mobile (1), et le terminal mobile (1) est réalisé pour demander une connexion au fournisseur d'identité (7), dans lequel une autorisation d'entrée ou d'accès pour la délivrance de la clé (10) par l'instance d'autorisation (8) est liée à l'identité virtuelle.

11. Dispositif de commande selon la revendication 10, **caractérisé en ce que** le terminal mobile (1) est formé par un smartphone, un ordinateur ou similaire.

12. Dispositif de commande selon la revendication 10 ou 11, **caractérisé en ce que** les moyens pour l'établissement de la liaison de données locale (3) est formé par un émetteur de communication en champ proche (NFC), un transpondeur RFID, un émetteur Bluetooth et/ou par un routeur WLAN.

13. Dispositif de commande selon l'une quelconque des revendications 10 à 12, **caractérisé en ce que** le terminal mobile (1) est réalisé pour recevoir la clé (10) de l'instance d'autorisation (8).

14. Dispositif de commande selon l'une quelconque des revendications 10 à 13, **caractérisé en ce que** le mécanisme de fermeture (2) présente des moyens pour la connexion à l'instance d'autorisation (8) par l'intermédiaire d'un réseau (6), de sorte que la clé (10), pour l'ouverture du mécanisme de fermeture (2), peut être transmise directement au mécanisme de fermeture (2) par l'instance d'autorisation (8).

15. Dispositif de commande selon l'une quelconque des revendications 10 à 14, **caractérisé en ce que** la transmission de la clé (10), pour l'ouverture du mécanisme de fermeture (2), dépend de conditions supplémentaires, en particulier de prescriptions temporelles.

16. Dispositif de commande selon l'une quelconque des revendications 10 à 15, **caractérisé en ce que** l'interface utilisateur (4) du terminal mobile (1) est formée par un écran tactile ou par une commande vocale.
